# EUROPEAN PATENT APPLICATION

(11) **EP 4 411 731 A1**
(43) Date of publication of application: **07.08.2024**
(21) Application number: 23837541.4
(22) Date of filing: 13.12.2023
(51) Int. Cl.: G10L 15/22, G10L 15/04, G10L 15/30, G06F 3/16

(54) **METHOD FOR SUPPORTING VOICE CALL WHEN USING MICROPHONE, AND ELECTRONIC DEVICE THEREFOR**

(30) Priority: 13.12.2022 KR 20220173688; 27.01.2023 KR 20230011149
(71) Applicant: Samsung Electronics Co., Ltd., Suwon-si, Gyeonggi-do 16677 (KR)
(72) Inventor: CHOI, Injune, Suwon-si, Gyeonggi-do 16677 (KR); AN, Hyunil, Suwon-si, Gyeonggi-do 16677 (KR); LEE, Hyojin, Suwon-si, Gyeonggi-do 16677 (KR)
(74) Representative: Nederlandsch Octrooibureau
(86) International application number: PCT/KR2023/020545
(87) International publication number: WO 2024/128799

(57) **Abstract**

Various embodiments of the disclosure may include a microphone (150), a sound output module (155), a memory (130), and a processor (120). Instructions stored in the memory cause, when executed by the processor, the electronic device to execute an application using the microphone, while the application using the microphone is executed, receive an input for calling a voice assistant, perform control to call the voice assistant, based on the input, and provide result data corresponding to a voice command received through the microphone. Various embodiments are possible.

## Description

### [Technical Field]

Various embodiments of the disclosure relate to a method of supporting a voice call when a microphone is used and an electronic device therefor.

### [Background Art]

With the development of digital technologies, various types of electronic devices such as mobile communication terminals, personal digital assistants (PDAs), electronic organizers, smartphones, tablet personal computers (PCs), and wearable devices have become widely used. The hardware parts and/or software parts of such electronic devices are continually improving in order to improve support and increase functions thereof.

For example, such electronic devices provide a voice assistant service that processes a task required by a user and gives a service specific for the user. A voice assistant may collect customized information on the basis of an artificial intelligence (AI) engine and voice recognition and provide the same to the user, and may perform various tasks of managing schedules, sending an email, making a restaurant reservation, and the like according to a user's voice command. As the voice assistant is installed in various home appliances or vehicles, an application range thereof is further expanding.

### [Disclosure of Invention]

### [Technical Problem]

Conventionally, a voice assistant could not be provided during a phone call, voice recording, or video capturing since a microphone phone is already being used. Particularly, an electronic device transmits voice data to a counterpart electronic device by audio-processing data (for example, a user voice) input into a microphone and transferring the data to a communication processor during a phone call. When an audio processing path is forcibly changed for a voice assistant service during a phone call in the state in which the audio processing path is configured, voice data transmitted to the counterpart electronic device may be processed to be mute and thus may not be transferred to the counterpart electronic device.

An embodiment may disclose a method and an apparatus for detecting a voice call (for example, Hi, Bixby) in the state in which an application (for example, a phone call, voice recording, or video capturing) using a microphone is executed, providing voice feedback of the voice call, and performing a function for a voice command.

### [Solution to Problem]

An electronic device 101 according to an embodiment of the disclosure includes a microphone 150, a sound output module 155, a memory 130, and a processor 120, wherein instructions stored in the memory cause, when executed by the processor, the electronic device to execute an application using the microphone, while the application using the microphone is executed, receive an input for calling a voice assistant, perform control to call the voice assistant, based on the input, and provide result data corresponding to a voice command received through the microphone.

A method of operating an electronic device according to an embodiment of the disclosure may include executing an application using a microphone 150, while the application using the microphone is executed, receiving an input for calling a voice assistant, performing control to call the voice assistant, based on the input, and providing result data corresponding to a voice command received through the microphone.

A non-transitory computer-readable recording medium recording a program for causing a processor to perform a method of operating an electronic device 101 according to an embodiment of the disclosure is provided. The program may include executing an application using a microphone 150, while the application using the microphone is executed, receiving an input for calling a voice assistant, performing control to call the voice assistant, based on the input, and providing result data corresponding to a voice command received through the microphone.

### [Advantageous Effects of Invention]

According to an embodiment, it is possible to control an audio processing path to call a voice assistant while an application using a microphone is used.

According to an embodiment, it is possible to improve the usability of the electronic device by making a virtual assistant service possible even during a phone call, voice recording, or video capturing.

According to an embodiment, it is possible to provide convenience by performing additional operations such as identifying the current time, registering schedule, or finding route by navigation through a voice assistant during a phone call.

According to an embodiment, it is possible to provide convenience to a user by allowing the user to use a voice assistant in the state in which it is not easy to control an electronic device like in a phone call state during driving.

According to an embodiment, it is possible to provide a voice assistant to a counterpart on a phone call through an electronic device of the user by sharing result data according to a voice command such as the current location, weather, and schedule with the counterpart.

According to an embodiment, it is possible to share a voice assistant with the counterpart while protecting personal information of the user by allowing a private mode to be configured to make a voice command or provide result data according to the voice command.

According to an embodiment, it is possible to efficiently use a space of the electronic device and reducing the cost by providing a voice assistant through the path control for audio processing at a kernel end without including a component (for example, an IC) related to a voice assistant.

### [Brief Description of Drawings]

FIG. 1 is a block diagram illustrating an electronic device within a network environment according to an embodiment.
FIG. 2 illustrates an audio processing-related framework of an electronic device according to an embodiment.
FIG. 3 is a flowchart illustrating a method of operating an electronic device according to an embodiment.
FIG. 4 is a conceptual diagram illustrating an operation of processing a user voice and audio of a voice assistant during a phone call in an electronic device according to an embodiment.
FIG. 5 is a flowchart illustrating a method of providing a voice assistant service during a phone call in an electronic device according to an embodiment.
FIGs. 6A to 6C illustrate audio processing frameworks during a phone call in an electronic device according to an embodiment,
FIGs. 7A and 7B illustrate audio processing frameworks based on a configuration of a private mode in an electronic device according to an embodiment.
FIG. 8 illustrates an example in which an electronic device uses a counterpart voice as a voice wake-up word according to an embodiment.
FIG. 9 is a flowchart illustrating a method of providing a voice assistant service during a phone call in an electronic device according to an embodiment.
FIG. 10 illustrates another audio processing framework during the phone call in the electronic device according to an embodiment.
FIG. 11 illustrates an audio processing framework during voice recording in an electronic device according to an embodiment.

### [Mode for the Invention]

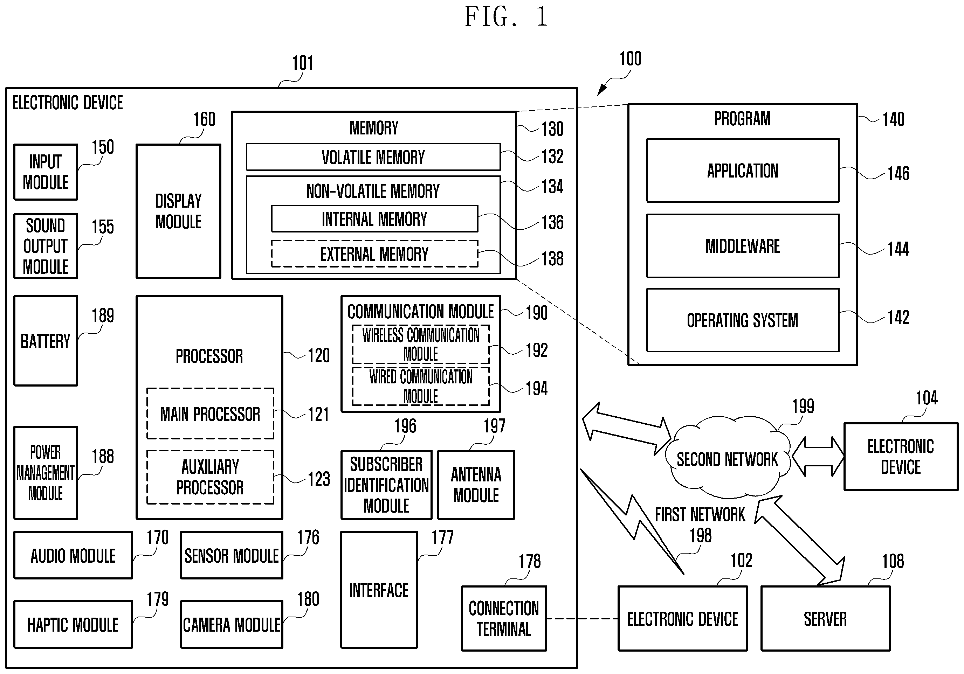

Fig. 1 is a block diagram illustrating an electronic device 101 in a network environment 100 according to certain embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semisupervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5th generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4th generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to certain embodiments, the antenna module 197 may form a mmWave antenna module. According to an embodiment, the mmWave antenna module may include a printed circuit board, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

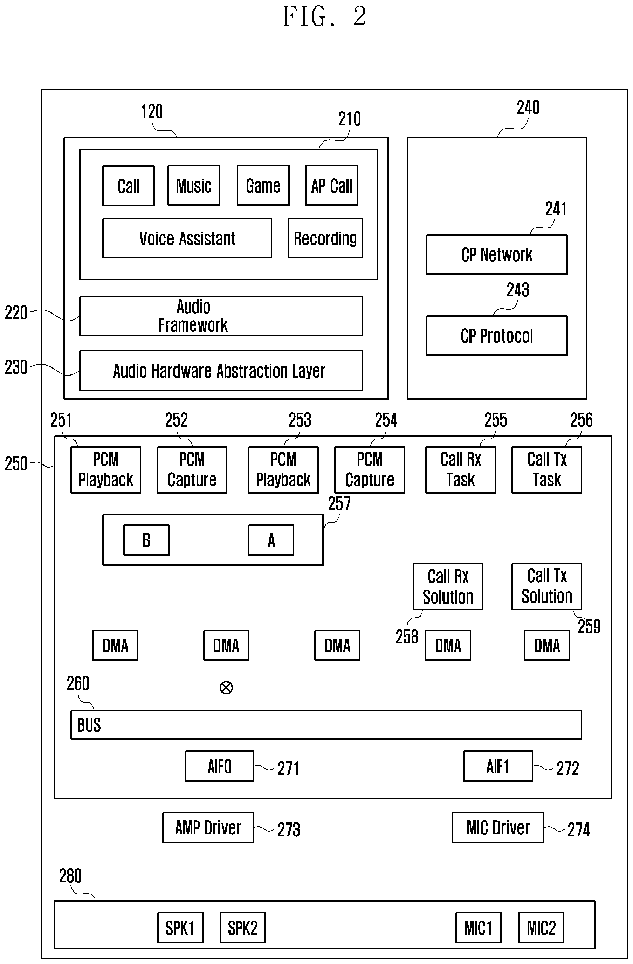

FIG. 2 illustrates an audio-processing related framework of an electronic device according to an embodiment.

Referring to FIG. 2, an audio-processing related framework of an electronic device (for example, the electronic device 101 of FIG. 1) according to an embodiment may include an application 210, an audio framework 220, an audio hardware abstraction layer (HAL) 230, a communication processor 240, an audio digital signal processor (DSP) 250, and hardware 280. The application 210, the audio framework 220, and the audio HAL 230 may be controlled by a processor (for example, the processor 120 of FIG. 1) of the electronic device 101. The communication processor 240 may be configured by a CP network 241 and a CP protocol 243 for transmitting/receiving a phone call sound (for example, a received sound and a transmitted sound) of a CP call. The communication processor 240 may transmit or receive a phone call sound through a communication module (for example, the communication module 190 of FIG. 1).

The application 210 is an application installed in the electronic device 101 and may include a phone call, music, a game, an Internet call (for example, as access point (AP) call), a voice assistant, or recording. The audio DSP 250 is performed in the kernel, and may include, for example, a pulse code modulation (PCM) playback 251, a PCM capture 252, a PCM playback 253, a PCM capture 254, a call Rx task 255, a call Tx task 256, a voice trigger solution 257, a call Rx solution 258, a call Tx solution 259, a bus 260, audio interface 0 (AIFO) 271, or audio interface 1 (AIF1) 272. The audio DSP 250 may include a plurality of direct memory accesses (DMAs). The kernel may include an AMP driver 273 or a MIC driver 274. The hardware 280 may include a first speaker (SPK1), a second speaker (SPK2), a first microphone (MIC1), or a second microphone (MIC2).

The PCM playback 251, the PCM capture 252, the PCM playback 253, and the PCM capture 254 may correspond to file nodes, and audio (for example, an audio file) may be read or written. For example, the application 210 may write audio to be output through the first speaker (SPK1) or the second speaker (SPK2) in the PCM playback 251 or the PCM playback 253. The audio DSP 250 may write audio acquired from the first microphone (MIC1) or the second microphone (MIC2) in the PCM capture 252 or the PCM capture 254, and the application 210 may read an audio file stored in the PCM capture 252 or the PCM capture 254.

The call Rx task 255, the call Tx task 256, the voice trigger solution 257, the call Rx solution 258, and the call Tx solution 259 may be nodes used for a phone call through the communication processor 240. The electronic device 101 may receive audio (for example, a counterpart voice) (or audio data or an audio file) from a counterpart electronic device (for example, the electronic device 102 of FIG. 1) through the CP network 241 and the CP protocol 243 of the communication processor 240. The received audio file may be output through the first speaker (SPK1) or the second speaker (SPK2) via the call Rx task 256 and the call Rx solution 258. The call Rx solution 258 may transfer echo cancellation and noise suppression technology (ECNS)-processed voice PCM data to the voice trigger solution 257.

Further, the audio DSP 250 may transfer the audio (for example, a user's voice) (or audio data or an audio file) acquired from the first microphone (MIC1) or the second microphone (MIC2) to the communication processor 240 via the call Tx solution 259 and the call Tx task 256. The call Tx solution 259 may transfer ECNS-processed voice PCM data to the call Tx task 256 and the voice trigger solution 257. The call Tx solution 259 may transfer audio data acquired from the microphone to the call Tx task 256 through a path which is the same as the existing call audio path, so that the phone call voice does not break up.

The electronic device 101 may control a processing path of the audio (or the audio signal) to provide the voice assistant service in the state in which an application (for example, a phone call, an AP call, or recording) using at least one microphone is executed. When the user makes a phone call without performing any other operation through the electronic device 101, the processor 120 may enter a sleep mode to minimize the current consumption. The processing path of the voice signal processed according to each application is described in detail with reference to the following drawings.

An electronic device 101 according to an emboidment of the disclosure may include a microphone 150, a sound output module 155, a memory 130, and a processor 120, wherein instructions stored in the memory may cause, when executed by the processor, the electronic device to execute an application using the microphone, while the application using the microphone is executed, receive an input for calling a voice assistant, perform control to call the voice assistant, based on the input, and provide result data corresponding to a voice command received through the microphone.

The instructions, when executed by the processor, may cause the electronic device to in case that the application is a phone aplication, output the result data corresponding to the voice command through the sound output module and not transmit the voice command and/or the reslut data to a counterpart electronic device (410) of a phone call performed by the phone application in case that the voice assitant operates in a private mode, and output the result data through the sound output module and transmit the voice command and/or the result data to the counterpart electronic device in case that the voice assistant operates in a public mode.

The instructions, when executed by the processor, may cause the electronic device to, in case that the application is a phone application and the voice assistant operates in a public mode, identify whether the voice command includes personal information, in case that the voice command includes the personal information, not transmit the voice command or the result data to a counterpart electronic device of a phone call performed by the phone application and output the voice command or the result data through the sound output module, and in case that the voice command does not include the personal information, output the voice command or the result data through the sound output module and transmit the voice command or the result data to the counterpart electronic device.

The instructions, when executed by the processor, may cause the electronic device to identify whether a user voice acquired through the microphone includes a voice wake-up word or whether a counterpart voice received from the counterpart electronic device includes a voice wake-up word.

The instructions, when executed by the processor, may cause the electronic device to, in case that the voice assistant operates in the public mode, identify whether the counterpart voice includes the voice wake-up word.

The instructions, when executed by the processor, may cause the electronic device to, in case that the voice assistant operates in the public mode, call the voice assistant, based on the voice wake-up word included in the counterpart voice, and in case that the voice assistant operates in the private mode, refrain from calling the voice assistant, based on the voice wake-up word included in the counterpart voice.

The electronic device may further include an audio digital signal processor (DSP) including a voice trigger module 257, wherein the voice trigger module may be configured to call the voice assistant, the input for calling the voice assistant includes receiving a voice wake-up word by speaking or selecting a button related to the voice assistant, the voice command is speaking to the voice assistant after a user calls the voice assistant, and the result data is a result provided by the voice assistant after the voice command is analyzed.

The instructions, when executed by the processor, may cause the electronic device to, in case that the application is a phone application and the voice assistant is called by the voice wake-up word, not transmit a voice feedback to a counterpart electronic device of a phone call performed by the phone application and output the voice feedback through the sound output module in case that the voice assistant operates in a private mode, and output the voice feedback by the voice assistant through the sound output module and transmit the voice feedback to the counterpart electronic device in case that the voice assistant operates in a public mode.

The instructions, when executed by the processor, may cause the electronic device to display text corresponding to the voice command or the result data in an execution screen of the application using the microphone on a display (160) of the electronic device.

The instructions, when executed by the processor, may cause the electronic device to, in case that the application using the microphone is a recording application, store the voice command or the result data together with recorded data of the recording application.

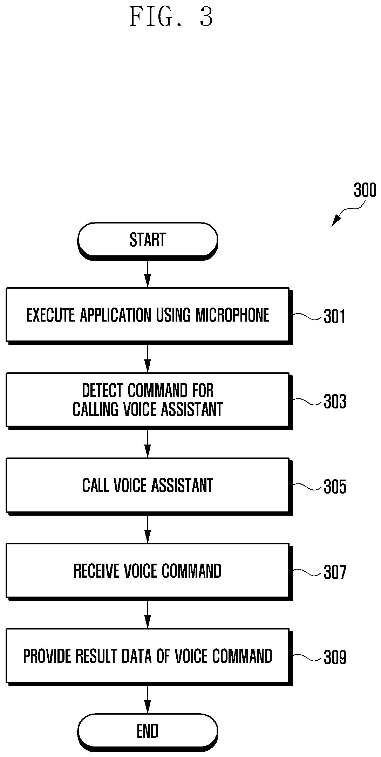

FIG. 3 is a flowchart 300 illustrating a method of operating an electronic device according to an embodiment.

Referring to FIG. 3, in operation 301, a processor (for example, the processor 120 of FIG. 1) of an electronic device (for example, the electronic device 101 of FIG. 1) according to an embodiment may execute an application using at least one microphone (for example, the input module 150 of FIG. 1). For example, the application may include a phone call (for example, a voice call or a video call), an Internet call, voice recording, or video recording. The following operations may include an operation of providing the voice assistant in the state in which an application using at least one microphone is executed.

In operation 303, the processor 120 (for example, the audio DSP 250 of FIG. 2) may detect a command of calling a voice assistant. The command of calling the voice assistant is making a request for the voice assistant by the user and, for example, the user may speak a predetermined voice wake-up word (for example, Hi, Bixby) or press a button related to the voice assistant. The processor 120 may detect whether the voice wake-up word is input through at least one microphone or the button is selected in the state in which the application using at least one microphone is executed.

According to an embodiment, when the button related to the voice assistant is selected by the user, the processor 120 may process the voice assistance to be in a private mode regardless of a mode (for example, a public mode or a private mode) configured in the voice assistant. When the user desires to hear an answer in the private mode, the user may press the button, rather than calling the voice assistant by voice. Alternatively, when the voice assistant is in the private mode, the processor 120 may control (or process) the voice assistant to be called only through the button.

In operation 305, the processor 120 (for example, the audio DSP 250) may call the voice assistant. When the voice wake-up word is detected or the button is selected, the processor 120 may determine that the voice assistant is called and call the voice assistant. In the prior art, the voice assistant could not be called while at least one microphone is used. However, in the disclosure, when a request for a voice call is made even while at least one microphone is used, the voice assistant may be called and the voice assistant may be provided to the user.

According to an embodiment, the processor 120 may output voice feedback. The voice feedback is feedback for the voice call and may include, for example, audio data such as "How can I help you?". The processor 120 may output voice feedback through the sound output module 155. According to an embodiment, when the user selects the button related to the voice assistant in operation 303, the output of the voice feedback may be omitted. That is, when the user presses the button without the voice command, the processor 120 may not provide voice feedback. When the voice wake-up word by speaking is not detected during the phone call, the processor 120 may output voice feedback by the voice assistant. According to an embodiment, the processor 120 may display a user interface associated with the voice feedback (for example, text corresponding to the voice feedback) on a display (for example, the display module 160 of FIG. 1). For example, the user interface associated with the voice feedback may be provided in the form of a pop-up window.

According to an embodiment, the processor 120 may control the output of the voice feedback according to a configuration of a private mode of the voice assistant. For example, when the request for the voice call is made during a phone call, the processor 120 may output voice feedback through the sound output module 155 and may not transmit the voice feedback to the counterpart electronic device if the voice assistant operates in the private mode. When the request for the voice call is made during a phone call, the processor 120 may output voice feedback through the sound output module 155 and transmit the voice feedback to the counterpart electronic device if the voice assistant is configured to be in the public mode (or an open mode).

In operation 307, the processor 120 may receive a voice command. The processor 120 may receive a voice command (for example, Tell me the weather today) from the user, decode (or analyze) the received voice command, and acquire result data. The voice command may be speaking of the user to the voice assistant after the user calls the voice assistant. According to an embodiment, the processor 120 may display text related to the received voice command on the display module 160. The text related to the received voice command may be provided to a pop-up window. For example, when the voice command is received while the user has a phone call, the text related to the received voice command may be displayed through the pop-up window on an execution screen of a phone application.

In operation 309, the processor 120 may provide result data corresponding to the received voice command. The result data may be a result provided by the voice assistant after the voice command is analyzed. The processor 120 may output the result data through the sound output module 155 and transmit the same to the counterpart electronic device during the phone call. Alternatively, when the voice assistant operates in the private mode, the processor 120 may output the result data through the sound output module 155 and may not transmit the same to the counterpart electronic device during the phone call. According to an embodiment, the processor 120 may display a user interface associated with the result data on the display module 160. For example, the user interface associated with the result data may be provided in the form a pop-up window on the execution screen of the phone application. Alternatively, the processor 120 may switch the execution screen of the phone application to the user interface associated with the result data (for example, change displaying).

When no voice command is input for a predetermined time (for example, 3 seconds or 5 seconds), the processor 120 may make a request for inputting a voice command.

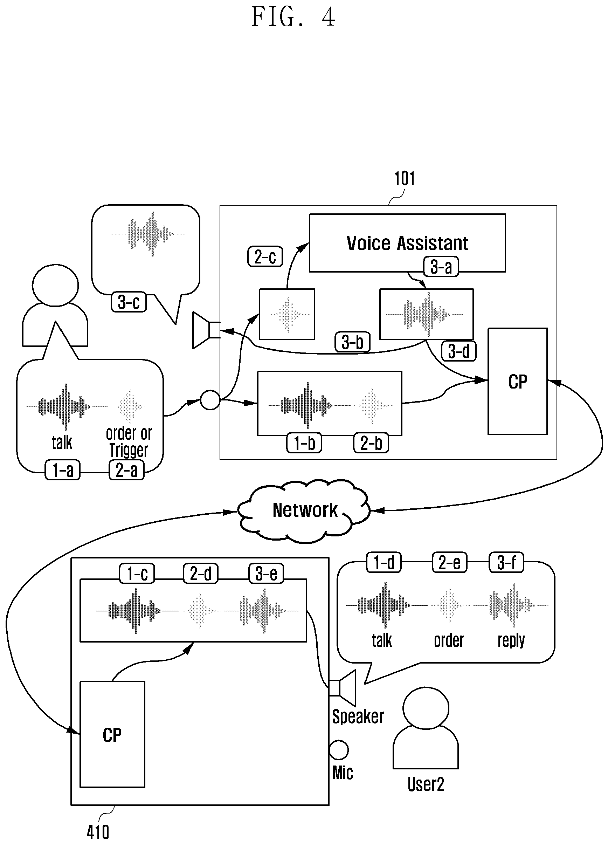

FIG. 4 is a conceptual diagram illustrating processing of a 'user's voice and audio of the voice assistant during a phone call in an electronic device according to an embodiment.

Referring to FIG. 4, a user (user 1) of an electronic device (for example, the electronic device 101 of FIG. 1) according to an embodiment may make a request for a voice assistant during a phone call with a counterpart (user 2) of a counterpart electronic device 410 (for example, the electronic device 102 of FIG. 1). Although a one-to-one phone call between the user and the counterpart is illustrated in the drawing, the disclosure can be equally applied to a group call between the user and a plurality of counterparts. During a phone call between the electronic device 101 and a counterpart electronic device 410, a user voice spoken to the counterpart may be indicated by 1-a, 1-b, 1-c, and 1-d, and voice assistant-related voice data may be indicated by 2-a, 2-b, 2-c, 2-d, and 2-e or 3-a, 3-b, 3-c, 3-d, 3-e, and 3-f. During the phone call, the user voice may be acquired through at least one microphone of the electronic device 101 as indicated by reference numeral 1-a, transferred to an audio DSP (for example, the audio DSP 250 of FIG. 2) of the electronic device 101 as indicated by reference numeral 1-b, and then transferred to the CP. The counterpart electronic device 410 may receive the user voice through a network, transferred from the CP of the counterpart electronic device 410 to the audio DSP as indicated by reference numeral 1-c, and output through the sound output module 155 as indicated by reference numeral 1-d.

During the phone call, the voice data may include a voice wake-up word (for example, Hi, Bixby, OK Google), voice feedback (for example, How can I help you?), a voice command (for example, Tell me tomorrow's schedule), and result data (for example, You have a meeting tomorrow at 1 o'clock).

For example, the voice wake-up word or the voice command may be input by the user through at least one microphone as indicted by reference numeral 2-a, transferred to the audio DSP 250 as indicated by reference numeral 2-b, and transferred to the CP. Further, the voice wake-up word or the voice command 2-c may be transferred to the voice assistant application. The counterpart electronic device 410 may receive the voice wake-up word through the network, and the voice wake-up word may be transferred from the CP of the counterpart electronic device 410 to the audio DSP as indicated by reference numeral 2-d and output through the sound output module 155 as indicated by reference numeral 1-e.

The voice feedback or the result data may be generated by the voice assistant application as indicated by reference numeral 3-a, transferred to the sound output module 155 to be output to the user as indicated by reference numeral 3-b, and transferred to the CP to be transmitted to the counterpart electronic device 410 as indicated by reference numeral 3-d. The voice assistant application may analyze the voice command to perform a command and generate result data as indicated by reference numeral 3-a. The voice feedback or the result data transferred to the sound output module 155 may be output through the sound output module 155 as indicated by reference numeral 3-c. The counterpart electronic device 410 may receive voice feedback or result data through the network, and the voice feedback or the result data may be transferred to from the CP of the counterpart electronic device 410 to the audio DSP as indicated by reference numeral 3-e and output through the sound output module 155 as indicated by reference numeral 3-f.

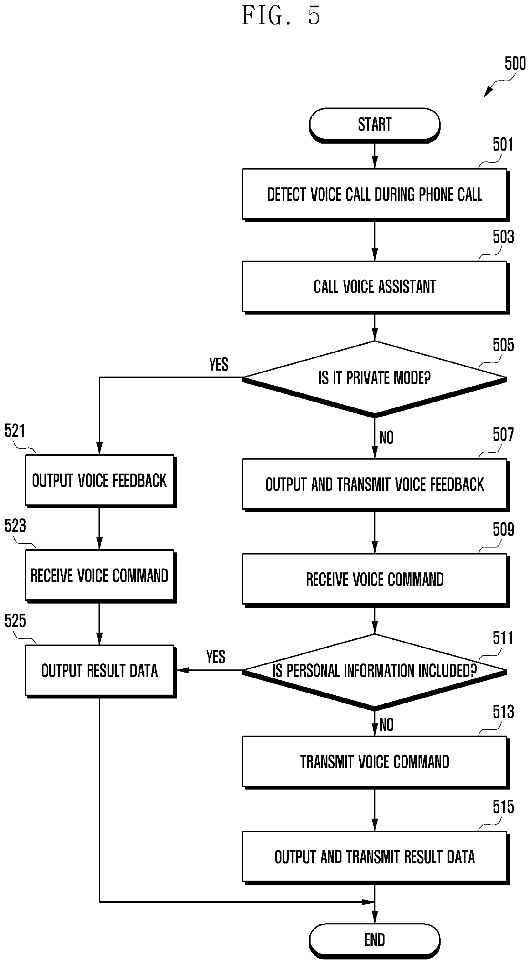

FIG. 5 is a flowchart 500 illustrating a method of providing a voice assistant during a phone call in an electronic device according to an embodiment. FIG. 5 may illustrate the operation of FIG. 3 in more detail.

Referring to FIG. 5, in operation 501, a processor (for example, the processor 120 of FIG. 1 or the audio DSP 250 of FIG. 2) of an electronic device (for example, the electronic device 101 of FIG. 1) according to an embodiment may detect a voice call during a phone call. During the phone call, at least one microphone may be used to acquire a user voice. The processor 120 may detect a voice wake-up word in the state in which an application using at least one microphone (for example, the input module 150 of FIG. 1) is executed. The voice call may be a request for the voice assistant by the user and, for example, the user may speak a predetermined voice wake-up word or press a button related to the voice assistant. The processor 120 may detect whether the voice wake-up word is input through at least one microphone or the button is selected in the state in which the application using at least one microphone is executed.

According to an embodiment, the voice call may be input by not only the user of the electronic device 101 but also the call counterpart. When the counterpart makes a voice call, information on the user of the electronic device 101 may be leaked. Accordingly, the user may configure the voice assistant application such that the voice call is possible (for example, voice call/command is allowed (on)) or impossible (for example, voice call/command is not allowed (off)) by the phone call counterpart. When the voice call/command is configured to be allowed, the processor 120 may detect whether a voice wake-up word is included in a counterpart's voice received from a counterpart electronic device (for example, the counterpart electronic device 410 of FIG. 4). When the voice call/command is configured to be allowed, the processor 120 may transfer the result of the call Rx solution (for example, the call Rx solution 258 of FIG. 2) within the audio DSP (for example, the audio DSP 250 of FIG. 2) to the voice trigger solution 257. When the voice call/command is configured to be not allowed, the processor 120 may not detect whether the voice wake-up word is included in the counterpart's voice received from the counterpart electronic device 410. When the voice call/command is configured to be not allowed, the processor 120 may not transfer the result of the call Rx solution 258 to the voice trigger solution 257.

According to an embodiment, when the voice assistant service operates in the public mode and the voice call command by another person is configured to be allowed in the voice assistant, the processor 120 may detect whether the voice wake-up word is included in the counterpart's voice. When the voice assistant operates in the private mode, the processor 120 may process the voice call command by another person to be impossible in the voice assistant and not detect whether the voice wake-up word is included in the counterpart's voice.

According to an embodiment, when the button related to the voice assistant is selected by the user, the processor 120 may configure processing (for example, the voice command or the result data) of the voice assistance to be in the private mode regardless of a mode (for example, the public mode or the private mode) configured in the voice assistant. When the user desires to hear an answer in the private mode, the user may press the button, rather than calling the voice assistant by voice. Alternatively, when the voice assistant is in the private mode, the processor 120 may control (or process) the voice assistant to be called only through the button.

In operation 503, the processor 120 (or the audio DSP 250) may call the voice assistant. When the user makes a phone call without performing any other operation through the electronic device 101, the processor 120 may enter a sleep mode to minimize the current consumption. When the voice wake-up word is detected during the phone call, the audio DSP (for example, the audio DSP 250 of FIG. 2) may call the voice assistant to switch the processor 120 from the sleep mode to the normal mode.

In operation 505, the processor 120 (or the audio DSP 250) may determine whether the voice assistant is in the private mode. The private mode may be a configuration of the electronic device 101 to protect user information. When the private mode is not configured (for example, the public mode is configured), the processor 120 may provide a voice related to the voice assistant to the counterpart electronic device 410 and selectively provide the same to the counterpart electronic device 410 according to voice data. When the private mode is configured, the processor 120 may not provide the voice related to the voice assistant to the counterpart electronic device 410. The processor 120 may perform operation 507 when the private mode does not operate, and may perform operation 521 when the private mode operates.

When the private mode does not operate (for example, the public mode operates), the processor 120 may output and transmit voice feedback in operation 507. The voice feedback is feedback for the voice call and may include, for example, audio data such as "How can I help you?". The voice feedback may be provided by the voice assistant application in response to the voice call. The processor 120 may output voice feedback through the sound output module 155 and transmit the same to the phone call counterpart electronic device 410. When an external output device (for example, earphones) is connected to the electronic device 101, the processor 120 may output the voice feedback through the external output device. According to an embodiment, the processor 120 may display a user interface associated with the voice feedback on a display (for example, the display module 160 of FIG. 1). For example, the user interface associated with the voice feedback may be provided in the form of a pop-up window.

In operation 509, the processor 120 may receive a voice command. The voice command may be acquired from the user of the electronic device 101 through at least one microphone (for example, the input module 150 of FIG. 1). When no voice command is input for a predetermined time (for example, for a time longer than the predetermined time), the processor 120 may make a request for inputting the voice command. According to an embodiment, the processor 120 may display text related to the received voice command on the display module 160. The text related to the received voice command may be provided to a pop-up window. For example, when the voice command is received while the user has a phone call, the text related to the received voice command may be displayed in the form of the pop-up window on the execution screen of the phone application.

In operation 511, the processor 120 may determine whether personal information is included in the voice command. For example, it may be determined whether the voice command corresponds a question which does not include personal information, such as weather, making a call, transmitting a message, taking a picture, or playing music, or a question including personal information, such as a message, an e-mail, calendar schedule, contacts, reminder, a call log, controlling smart home.

The processor 120 may perform operation 525 when the voice command includes the personal information, and may perform operation 513 when the voice command does not include the personal information.

When the voice command does not include the personal information, the processor 120 may transmit the voice command received through at least one microphone 150 to the counterpart electronic device 410 in operation 513. According to an embodiment, when the public mode operates, it may be determined whether the voice call/command is configured to be 'on' and, when the voice call/command is configured to be `on', the processor 120 may determine whether a counterpart's voice received from the counterpart electronic device 410 includes a voice wake-up word. However, the description of FIG. 5 is for an example of receiving a voice call and a voice command from the user. The disclosure is not limited by the description.

In operation 515, the processor 120 may output and transmit result data corresponding to the voice command. The voice assistant application may generate result data by analyzing the voice command. For example, when the voice command is `Tell me the weather today', the result data may be `It is sunny today. The current temperature is 23 degrees and the humidity is 65%'. The processor 120 may output the result data to the sound output module 155 and transmit the same to the counterpart electronic device 410. When an external output device (for example, earphones) is connected to the electronic device 101, the processor 120 may output the result data through the external output device.

According to an embodiment, the processor 120 may display a user interface associated with result data on the display module 160. For example, the user interface associated with the result data may be provided in the form of a pop-up window on the execution screen of the phone application. Alternatively, the processor 120 may switch the execution screen of the phone application to the user interface associated with the result data.

When the private mode operates, the processor 521 may output voice feedback in operation 521. When the private mode operates, the processor 521 may output voice feedback to the sound output module 155 and may not transmit the same to the counterpart electronic device 410. For example, the voice feedback provided by the voice assistant application may be written in the PCM playback 251 within the audio DSP 250. The voice trigger solution 257 may read the voice feedback from the PCM playback 251 and transfer the same to AIFO 271, and may not transfer the same to the call Tx task (for example, the call Tx task 256 of FIG. 2). When an external output device (for example, earphones) is connected to the electronic device 101, the processor 120 may output the voice feedback through the external output device.

In operation 523, the processor 521 may receive a voice command. The voice command may be acquired from the user of the electronic device 101 through the input module 150. The voice command received through at least one microphone 150 may be transferred only to the voice assistant application and may not be transferred to the counterpart electronic device 410.

In operation 525, the processor 521 may output result data corresponding to the voice command. The voice assistant application may generate result data by analyzing the voice command. When the private mode operates, the processor 120 may output the result data to the sound output module 155 and may not transmit the same to the counterpart electronic device 410. Even when the public mode operates but personal information is included in the voice command, the processor 120 may output the result data to the sound output module 155 and may not transmit the same to the counterpart electronic device 410. When an external output device (for example, earphones) is connected to the electronic device 101, the processor 120 may output the result data through the external output device.

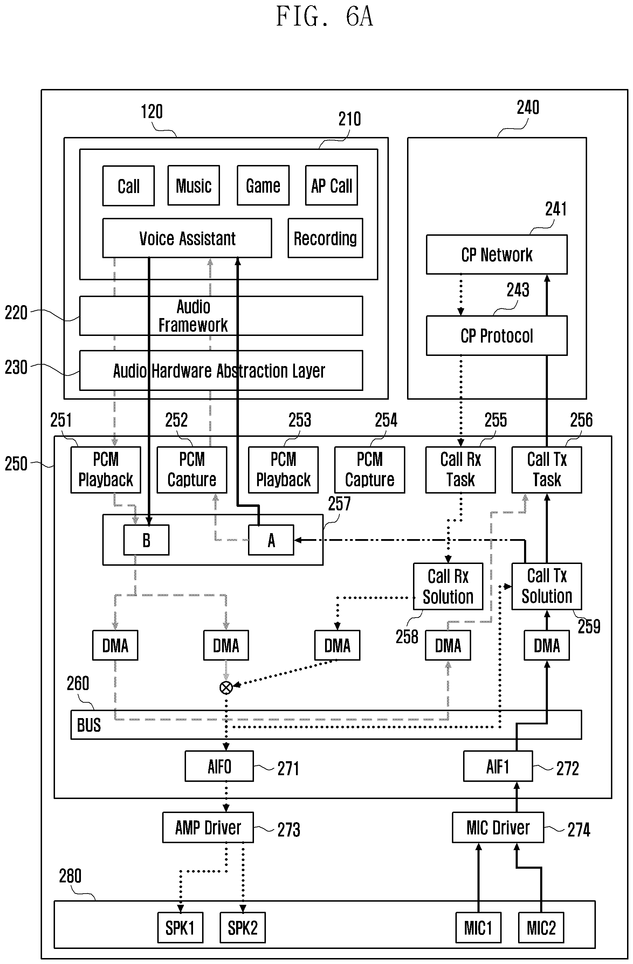

FIG. 6A illustrates an audio processing framework during a phone call of an electronic device according to an embodiment.

Referring to FIG. 6A, an electronic device (for example, the electronic device 101 of FIG. 1) according to an embodiment may control the input and the output of audio data during a phone call. When the electronic device 101 does not perform a function other than the phone call, the electronic device 101 may switch the processor 120 to the sleep mode to reduce power consumption. Audio input data may be input into the inside of the audio DSP (for example, the audio DSP 250 of FIG. 2) from at least one microphone (for example, MIC1 and MIC2) through audio interface 1 (AIF1) 272, input into the CP via the DMA, the call Tx solution (for example, the call Tx solution 259 of FIG. 2), and the call Tx task (for example, the call Tx task 256 of FIG. 2), and transferred to the counterpart electronic device (for example, the counterpart electronic device 410 of FIG. 4). The audio input data may include a user's voice and surrounding sounds. The call Tx solution 259 may receive audio output data output from the sound output module 155 (for example, SPK1 or SPK2) of the electronic device 101 and improve the sound quality of the audio input data. The call Tx solution 259 may remove howling, echo, or noise of the audio input data on the basis of reference data. The audio input data passing through the call Tx solution 259 may be data of the high sound quality having improved noise and echo, and may be transferred to the call Tx task 256 as call Tx data and input into the voice trigger solution 257. It may be determined whether the data input into the voice trigger solution 257 is a voice wake-up word within an internal block (A).

The audio output data may be input into the inside of the audio DSP 250 through the CP from the counterpart electronic device 410 and may be output to the sound output mode 155 (for example, SPK1 or SPK2) via the call Rx task (for example, the call Rx task 255 of FIG. 2), the call Rx solution (for example, the call Rx solution 258 of FIG. 2), and the DMA. The audio output data may include a counterpart's voice and surrounding sounds. The audio output data passing through the call Rx solution 258 may be data of the high sound quality having improved noise and echo, and may be transferred to audio interface 0 (AIFO) 271 and input into the voice trigger solution 257.

According to an embodiment, the voice call by the phone call counterpart may be configured to be possible (for example, voice call/command is allowed (on)) or impossible (for example, voice call/command is not allowed (off) in the voice assistant application. When the voice call by the counterpart is configured to be possible in the voice assistant application, the audio output data passing through the call Rx solution 258 may be input into the voice trigger solution 257. When the voice call by the counterpart is configured to be possible in the voice assistance application, the audio output data passing through the call Rx solution 258 may be transferred only to AIFO 271 and may not be input into the voice trigger solution 257. According to an embodiment, when the private mode is configured in the voice assistant, the audio DSP 250 may process the voice call by the phone call counterpart to be impossible (for example, the voice call/command is not allowed (off)).

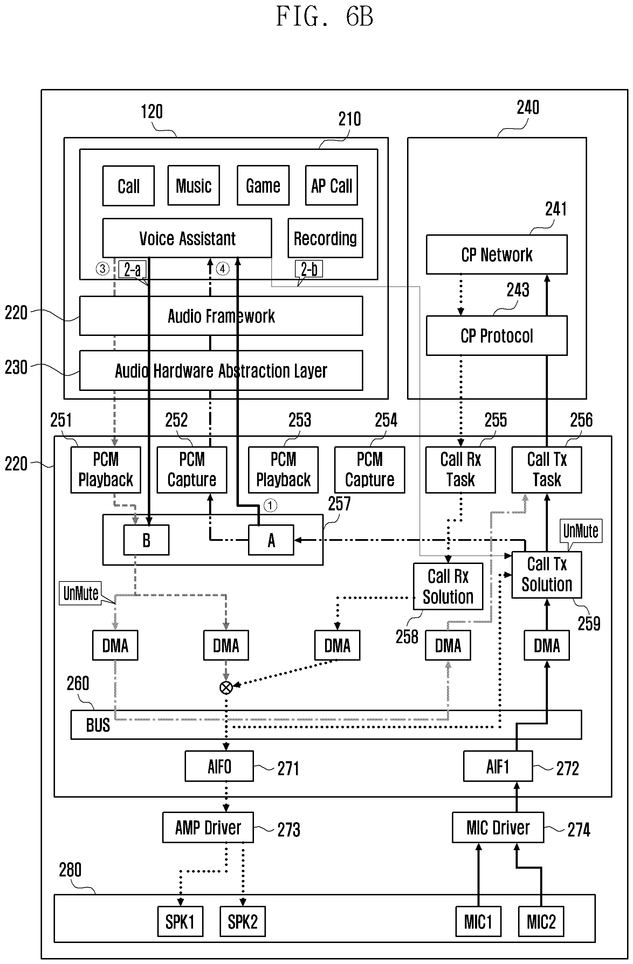

FIG. 6B illustrates a framework for providing a voice assistant during a phone call of an electronic device according to an embodiment.

Referring to FIG. 6B, when a block A of the voice trigger solution 257 recognizes a voice call during the phone call, the block A may generate AP wake-up interrupt and transfer a trigger event to the voice assistant application (for example, ①). An audio processing path during the phone call may be the same as that of FIG. 6A. When the audio is processed and a voice call is detected as shown in FIG. 6A, the processing path may be added as shown in FIG. 6B. When the voice assistant application receives the trigger event, the voice assistant application may open the PCM playback (for example, the PCM playback 251 of FIG. 2) (for example, ③) and output voice feedback in order to inform the user that the voice assistant (or voice AI) waits for receiving a voice command. The voice feedback may be a short notification sound or voice feedback such as "Yes, how may I help you?". The voice feedback may be output to the sound output module 155 via the DMA and AIFO 271 through the PCM playback 251, transferred to the call Tx task 256, and transferred to the counterpart electronic device 410 through the CP.

After the voice feedback is output, the audio DSP 250 may open the PCM capture 252 and acquire a voice command (for example, a user voice command) (for example, 40) from at least one microphone. For example, the voice command may include `How is the weather tomorrow?', 'Tell me the schedule for tonight', or 'End the phone call'. The voice assistant application may understand the voice command and generate result data. A private mode for protecting personal information may be configured in the voice assistant application. When the private mode is off (for example, is not configured) (for example, the public mode is configured), the voice command and the result data may be output to the sound output module 155 via the DMA and AIFO 271 through the PCM playback 251, transferred to the call Tx task 256, and transferred to the counterpart electronic device 410 through the CP.

According to an embodiment, when the private mode is on/off in the voice assistant application, audio data (for example, voice feedback and result data) which the voice assistant outputs to the counterpart and voice data (for example, the voice command) which the user transfers to the voice assistant may be processed to be mute/unmute through the control of mute/unmute within the audio DSP 250 by processes (2-a) and (2-b).

In FIG. 6B, the private mode is not configured in the voice assistant application (for example, unmute), and thus the voice command and the result data may be output to the sound output module 155 via the DMA and AIFO 271 through the PCM playback 251, transferred to the call Tx task 256, and transferred to the counterpart electronic device 410 through the CP. When the public mode is configured in the voice assistant application, the call may be made through a button (for example, an H/W key or an S/W key) related to the voice assistant. In FIG. 6B, since the voice command (for example, the user voice command) may be acquired from at least one microphone (for example, ④) after unmute processing of (2-a) and (2-b), the voice command or the result data may be transferred to the counterpart electronic device 410.

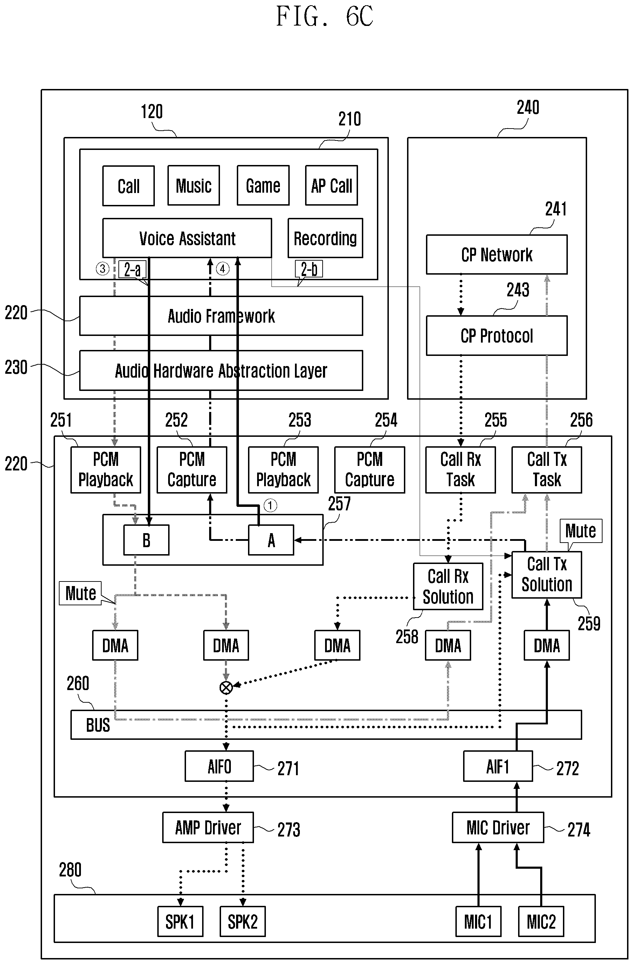

FIG. 6C illustrates a framework for providing a voice assistance during a phone call of an electronic device according to an embodiment.

Referring to FIG. 6C, when a block A of the voice trigger solution 257 recognizes a voice call during the phone call, the block A may generate AP wake-up interrupt and transfer a trigger event to the voice assistant application (for example, ①). When the voice assistant application receives the trigger event, the voice assistant application may open the PCM playback (for example, the PCM playback 251 of FIG. 2) (for example, ③) and output voice feedback in order to inform the user that the voice assistant (or voice AI) waits for receiving a voice command. After the voice feedback is output, the audio DSP 250 may open the PCM capture 252 and acquire a voice command (for example, a user voice command) (for example, ④) from at least one microphone.

In FIG. 6C, the private mode is configured in the voice assistant application (for example, mute), and thus the voice command and the result data may be output to the sound output module 155 via the DMA and AIFO 271 through the PCM playback 251 and may not be transferred to the call Tx task 256. The voice command and the result data may be processed to be mute and not be transmitted to the counterpart electronic device 410.

Even when the private mode is configured in the voice assistant application and a voice trigger is made through a voice wake-up word (for example, Hi Bixby or Hey Google), it may be difficult to distinguish the voice wake-up word from a normal call voice (for example, a user's voice) to process mute/unmute. Even when the private mode is configured in the voice assistant application, the voice wake-up word may be transmitted to the counterpart electronic device 410 during the phone call. Alternatively, when the user selects a button (for example, an H/W key or an S/W key) related to the voice assistant, an operation of outputting the voice wake-up word and voice feedback for the voice wake-up word may be omitted (or skipped). Since a voice command (for example, a user voice command) is acquired from at least one microphone (for example, ④) after the mute processing process through (2-a) and (2-b), the voice command or the result data may be processed to be mute and may not be transmitted to the counterpart electronic device 410 when the private mode is configured in the voice assistant application.

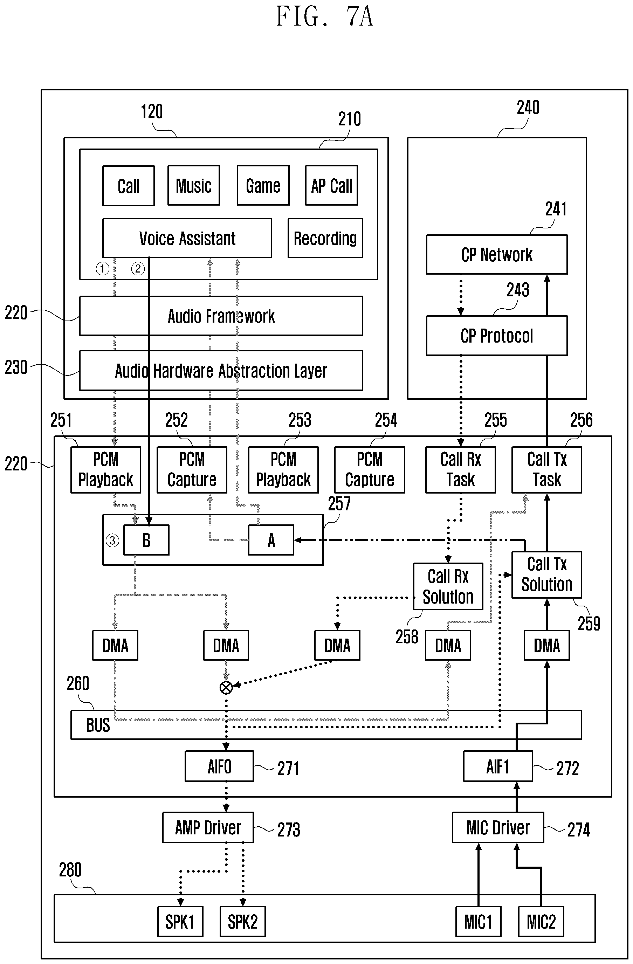

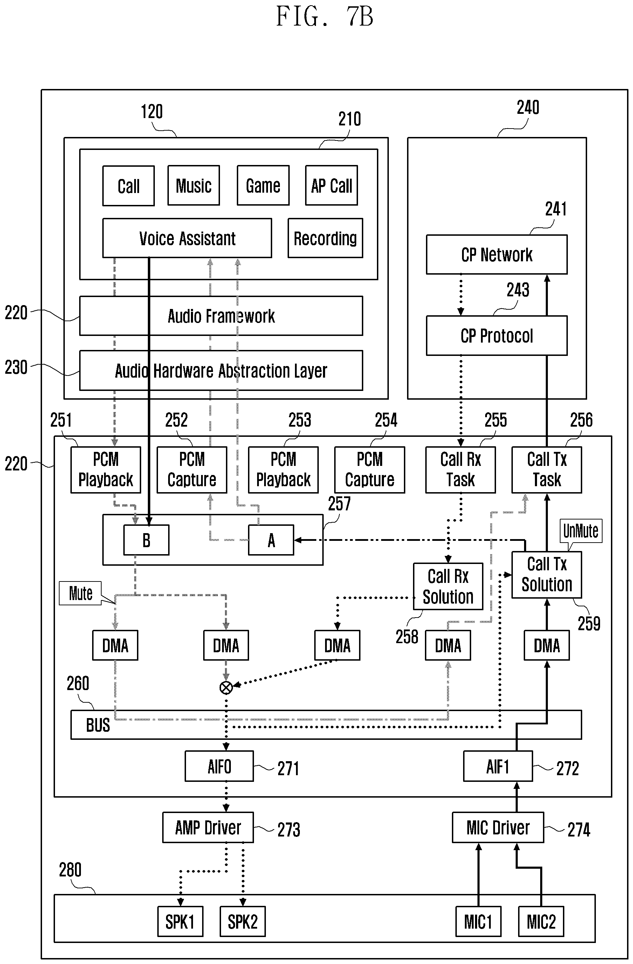

FIGs. 7A and 7B illustrate audio processing frameworks based on a configuration of a private mode in an electronic device according to an embodiment.

Referring to FIG. 7A, the voice assistant application may analyze a voice command, convert result data into a voice, and output the voice. For example, the result data (for example, audio output data) may be data, such as `It is raining tonight. Bring an umbrella', `There is an alumni meeting at Gangnam station at 8:00 this evening', or `End the phone call'. The processor (for example, the processor 120 of FIG. 1) of the electronic device (for example, the electronic device 101 of FIG. 1) may open the PCM playback 251 (for example, ①) and write the result data in the PCM playback 251. The result data may be transferred to the voice trigger solution 257, output to the sound output module 155 (SPK1 or SPK2) via the DMA and AIFO 271, transferred to the call Tx task 256 via the DMA and a bus 260 to be transmitted to the phone call counterpart, and then transmitted to the counterpart electronic device 410 through the CP. At this time, according to a state of the private mode, the voice assistant application may control a block B within the voice trigger solution 257 (for example, ②) and process output data transferred to the call Tx task 256 to be mute/unmute (for example, ③).

Referring to FIG. 7B, when the private mode is configured in the voice assistant application, the call Tx solution 259 may be processed to be unmute and data transferred from the voice trigger solution 257 to the CP may be processed to be mute, and thus information such as `There is an alumni meeting at Gangnam station at 8:00 this evening' may not be transferred to the counterpart.

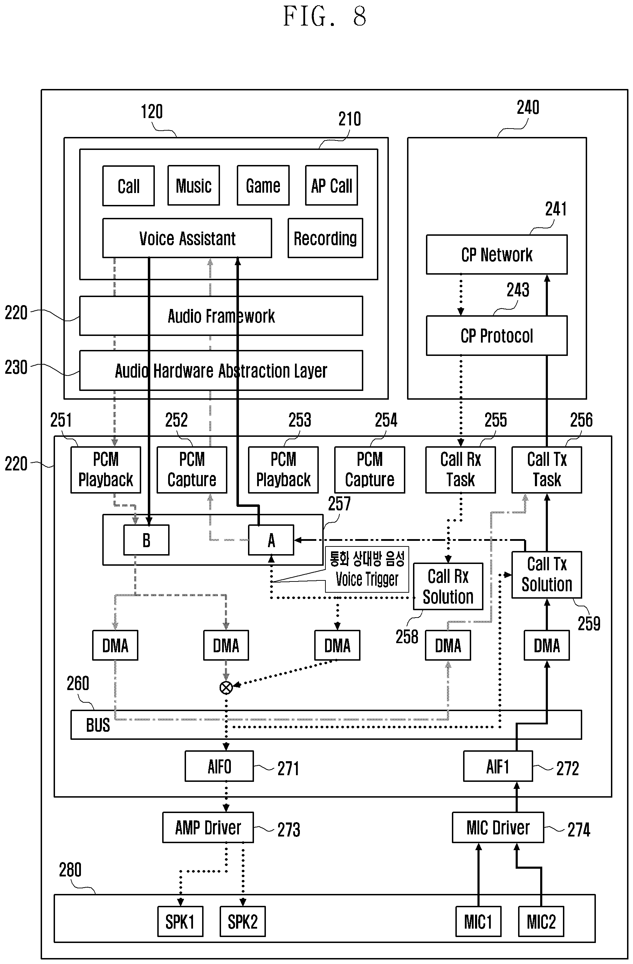

FIG. 8 illustrates an example in which an electronic device uses a counterpart voice as a voice call according to an embodiment.

Referring to FIG. 8, the electronic device (for example, the electronic device 101 of FIG. 1) according to an embodiment may provide a framework to call a voice assistant through a phone call counterpart. A block A within the voice trigger solution 257 may receive a counterpart's voice from the call Rx solution 258. The block A may detect whether a voice wake-up word is included in the counterpart's voice. The electronic device 101 may identify whether the counterpart electronic device (for example, the counterpart electronic device 410 of FIG. 4) supports a voice assistant. When it is identified that the counterpart electronic device 410 supports the voice assistant, the electronic device 101 may configure the voice assistant of the user to be not called (for example, refrain from calling) by the counterpart during the phone call. When the electronic device 101 identifies that the counterpart electronic device 410 does not support the voice assistant, the counterpart may call the voice assistant and make a voice command during the phone call with the user.

According to an embodiment, when the counterpart makes a voice call, information on the user of the electronic device 101 may be leaked. Accordingly, the user may configure the voice assistant application such that the voice call is possible (for example, the voice call/command is on) or impossible (for example, the voice call/command is off) by the call counterpart. When the voice call/command is configured to be allowed, the processor (for example, the processor 120) may detect whether the voice wake-up word is included in the counterpart's voice received from the counterpart electronic device 410. When the voice call/command is configured to be allowed, the processor 120 may transfer the result of the call Rx solution 258 within the audio DSP 250 to the voice trigger solution 257. When the voice call/command is configured to be not allowed, the processor 120 may not detect whether the voice wake-up word is included in the counterpart's voice received from the counterpart electronic device 410. When the voice call/command is configured to be not allowed, the processor 120 may not transfer the result of the call Rx solution 258 to the voice trigger solution 257.

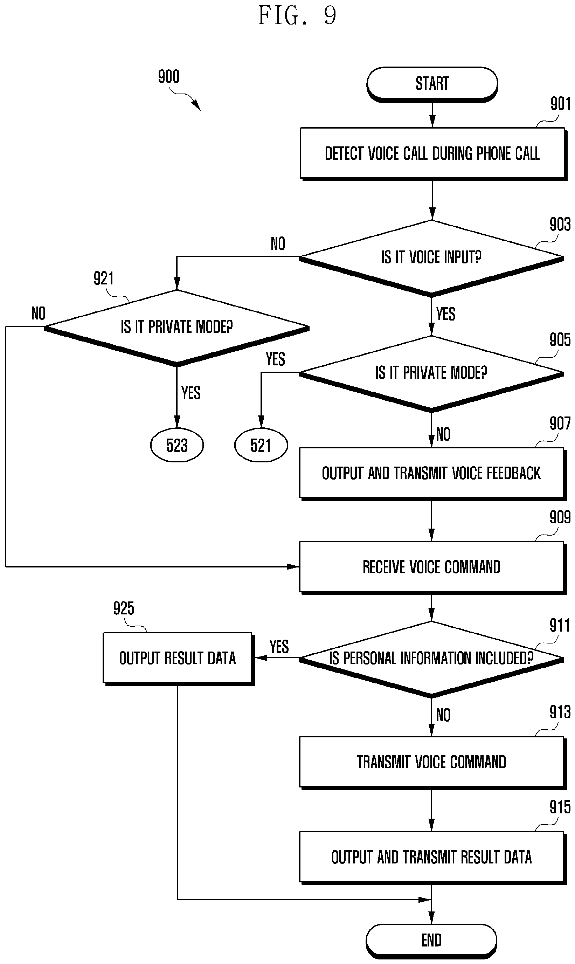

FIG. 9 is a flowchart 900 illustrating a method of providing a voice assistant during a phone call in an electronic device according to an embodiment.

Referring to FIG. 9, in operation 901, the processor (for example, the processor 120 of FIG. 1) of the electronic device (for example, the electronic device 101 of FIG. 1) according to an embodiment may detect a voice assistant call during a phone call. During the phone call, at least one microphone may be used to acquire a user voice. The processor 120 may detect a user input for calling a voice assistant in the state in which an application using at least one microphone is executed. The user input is making a request for the voice assistant by the user, for example, speaking a predetermined voice wake-up word or pressing a button related to the voice assistant by the user. The processor 120 may detect whether the voice wake-up word is input through at least one microphone or detect whether the predetermined button is selected in the state in which the application using at least one microphone is executed.

In operation 903, the processor 120 may determine whether the voice assistant is called through a voice. Calling the voice assistant may be performed through a user utterance or button selection. The processor 120 may perform operation 905 when the voice assistant is the voice call and may perform operation 921 when the voice assistant is not the voice call.

When the voice assistant is the voice call, the processor 120 may determine whether a private mode is configured in operation 905. The private mode can be configured in the voice assistant application in order to protect personal information of the user. The processor 120 may determine whether the private mode is configured in the voice assistant application. The processor 120 may perform operation 521 of FIG. 5 when the voice assistant application operates in the private mode, and may perform operation 907 when the voice assistant application does not operate in the private mode.

When the voice assistant application operates in the private mode, the processor 120 may return to operation 521 of FIG. 5 and perform an operation of outputting voice feedback only to the sound output module 155 and not transmitting the same to the counterpart electronic device.

When the private mode does not operate (for example, the public mode operates), the processor 120 may output and transmit the voice feedback in operation 907. The voice feedback is feedback for the voice call and may include, for example, audio data such as "How can I help you?". The voice feedback may be provided by the voice assistance application in response to the voice call. The processor 120 may output the voice feedback through the sound output module 155 and transmit the same to the phone call counterpart electronic device (for example, the counterpart electronic device 410 of FIG. 4). When an external output device (for example, earphones) is connected to the electronic device 101, the processor 120 may output the voice feedback through the external output device.

In operation 909, the processor 120 may receive a voice command. The voice command may be acquired from the user of the electronic device 101 through at least one microphone (for example, the input module 150 of FIG. 1).

In operation 911, the processor 120 may determine whether personal information is included in the voice command. For example, it may be determined whether the voice command corresponds a question which does not include personal information, such as weather, making a call, transmitting a message, taking a picture, or playing music, or a question including personal information, such as a message, an e-mail, calendar schedule, contacts, reminder, a call log, controlling smart home.

The processor 120 may perform operation 925 when the voice command includes the personal information, and may perform operation 913 when the voice command does not include the personal information.

When the voice command does not include the personal information, the processor 120 may transmit the voice command received through at least one microphone 150 to the counterpart electronic device 410 in operation 913.

In operation 915, the processor 120 may output and transmit result data corresponding to the voice command. The voice assistance application may generate result data by analyzing the voice command. For example, when the voice command is `Tell me the weather today', the result data may be `It is sunny today. The current temperature is 23 degrees and the humidity is 65%'. The processor 120 may output the result data to the sound output module 155 and transmit the same to the counterpart electronic device 410. When an external output device (for example, earphones) is connected to the electronic device 101, the processor 120 may output the result data through the external output device.

When the voice assistant is not the voice call, the processor 120 may determine whether a private mode is configured in operation 921. The processor 120 may determine whether the private mode is configured in the voice assistant application. The processor 120 may perform operation 523 of FIG. 5 when the voice assistant application operates in the private mode, and may perform operation 909 when the voice assistant application does not operate in the private mode.

When the voice assistant is not the voice call, the processor 120 may skip the operation of outputting the voice feedback and receive the voice command. When receiving the voice command, the processor 120 may acquire the voice command from the user of the electronic device 101 through the input module 150. When receiving a request for calling the voice assistant through a button rather than the user's voice, the processor 120 may not provide the voice feedback. When the button is selected by the user, the processor 120 may immediately receive the voice command.

In operation 925, the processor 120 may output result data. The voice assistance application may generate result data by analyzing the voice command. When the private mode operates, the processor 120 may output the result data to the sound output module 155 and may not transmit the same to the counterpart electronic device 410. Even when the public mode operates but personal information is included in the voice command, the processor 120 may output the result data to the sound output module 155 and may not transmit the same to the counterpart electronic device 410. When an external output device (for example, earphones) is connected to the electronic device 101, the processor 120 may output the result data through the external output device.

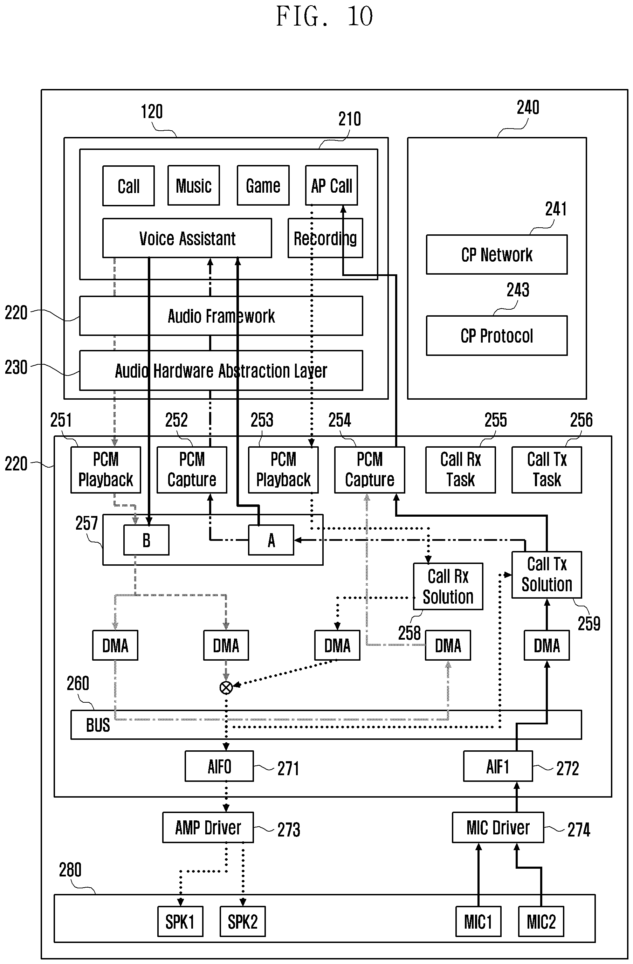

FIG. 10 illustrates another audio processing framework during the phone call in the electronic device according to an embodiment.

Referring to FIG. 10, the electronic device (for example, the electronic device 101 of FIG. 1) according to an embodiment may control the input and the output of audio data during an AP call. The AP call may include a network call through the AP such as Skype, KakaoTalk, or Google Duo. The AP call has only a difference in the structure of supporting the voice assistant operation and in that PCM data input and output to the CP is input and output to the AP during the CP call operation (for example, the operation of FIG. 5), but the overall operation may be the same. The AP call is performed without passing through the CP, and thus the processor (for example, the processor 120 of FIG. 1) may operate in the normal mode. The audio input data may be input into the inside of the audio DSP (for example, the audio DSP 250 of FIG. 2) from at least one microphone (for example, MIC1 and MIC2) through AIF1 272 and stored in the PCM capture 245 via the DMA and the call Tx solution (for example, the call Tx solution 259 of FIG. 2). The AP call application may read audio input data stored in the PCM capture 245. The AP call application may transfer the audio input data to a counterpart electronic device (for example, the counterpart electronic device 410 of FIG. 4). The audio input data may include a user's voice and surrounding sounds.

The call Tx solution 259 may receive audio output data output from the sound output module 155 (for example, SPK1 or SPK2) of the electronic device 101 as reference data and improve the sound quality of the audio input data. The call Tx solution 259 may remove howling, echo, or noise of the audio input data on the basis of reference data. The audio input data passing through the call Tx solution 259 may be data of the high sound quality having improved noise and echo, and may transfer the data to the AP call application as call Tx data and input the same into the voice trigger solution 257. It may be determined whether the data input into the voice trigger solution 257 is a voice wake-up word within an internal block (A).

The audio output data is received from the counterpart electronic device 410 and may be written in the PCM playback 253 of the audio DSP 250 through the AP call application. The audio output data stored in the PCM playback 253 may be output to the sound output module 155 (for example, SPK1 or SKP2) via the call Rx solution (for example, the call Rx solution 258 of FIG. 2) and the DMA. The audio output data may include a counterpart's voice and surrounding sounds. The audio output data passing through the call Rx solution 258 may be data of the high sound quality having improved noise and echo, and may be transferred to AIFO 271 and input into the voice trigger solution 257.

According to an embodiment, the voice assistant application may be configured such that a voice call by the phone call counterpart is possible (for example, the voice call/command is allowed (on)) or is impossible (for example, the voice call/command is not allowed (off)). When the voice call by the counterpart is configured to be possible in the voice assistance application, the audio output data passing through the call Rx solution 258 may be input into the voice trigger solution 257. When the voice call by the counterpart is not configured to be possible in the voice assistance application, the audio output data passing through the call Rx solution 258 may be transferred only to AIFO 271 and may not be input into the voice trigger solution 257.

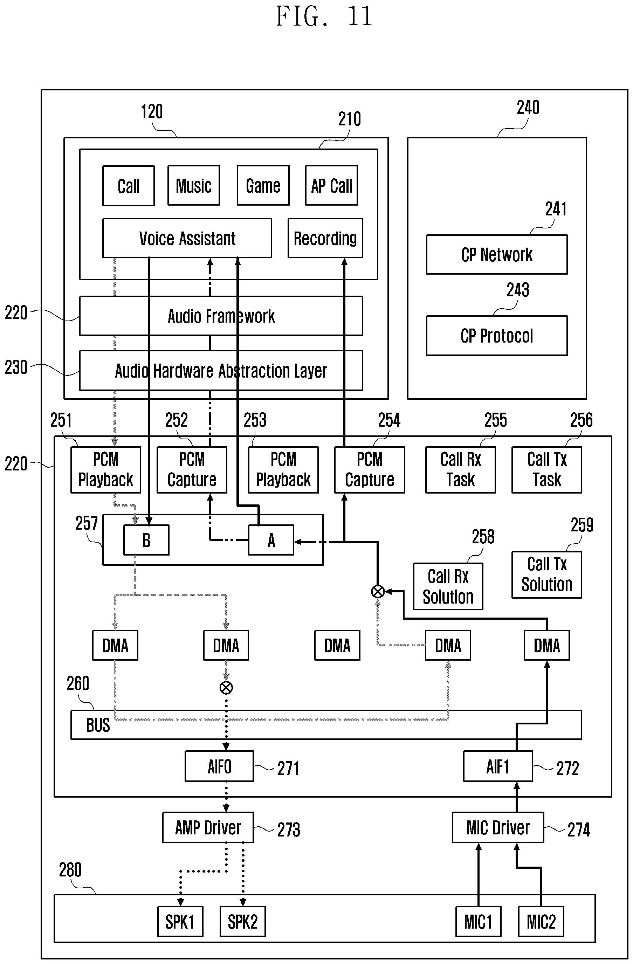

FIG. 11 illustrates an audio processing framework during voice recording in an electronic device according to an embodiment.

Referring to FIG. 11, the electronic device (for example, the electronic device 101 of FIG. 1) according to an embodiment may control the input and the output of audio data during recording. In recording, the processor (for example, the processor 120 of FIG. 1) may operate in a normal mode. The audio input data may be input into the inside of the audio DSP (for example, the audio DSP 250 of FIG. 2) from at least one microphone (for example, MIC1 and MIC2) through AIF 1 272 and stored in the PCM capture 254 via the DMA. A recording application may use the audio input data stored in the PCM capture 254 as audio data of voice recording or video capturing. The audio input data acquired through at least one microphone may be transferred to the voice trigger solution 257 and it may be determined whether the audio input data is a voice wake-up word in the block (A).

When the voice wake-up word is included in the audio input data or when a button related to the voice assistant application is selected, the voice trigger solution 257 may transfer a voice call to the voice assistant application. The voice assistant application may write voice feedback or result data in the PCM playback 251 and output the voice feedback or the result data through the sound output module 155 via the DMA.

Recording may include voice recording or video capturing. The difference from the AP call or CP call operation is that there is on phone call counterpart and thus a voice input transferred to the application may be mixed with a voice assistant feedback sound source and a command result sound source and then the mixed sound may be input. The feedback sound source output by the voice assistant and the command result sound source may be stored together in the voice recording result or together in the video capturing data.

For example, when the user calls 'Hi, Bixby. Where am I?' while capturing a video during a trip, the voice assistant application may output `The current location is Haeundae Beach, Haeundae-gu, Busan' to the sound output module 155. The voice command and the result data may be stored together when recording is performed. When recorded image data (or voice data) is output through the SNS or streaming, conversation corresponding to questions to the voice assistant and answers of the voice assistant may be output together in the image and thus the user viewing the stored image may also listen to the answers of the voice assistant at the time of capturing. In a normal recording app, audio data may be equally stored in the same way of the voice recording app, and a Mic usage scenario of other 3^{rd} party applications may be equally operated.

A method of operating an electronic device according to an embodiment of the disclosure may include an operation of executing an application using a microphone 150, an operation of, while the application using the microphone is executed, receiving an input for calling a voice assistant, an operation of performing control to call the voice assistant, based on the input, and an operation of providing result data corresponding to a voice command received through the microphone.

The method may include, in case that the application is a phone aplication, an operation of outputting the result data corresponding to the voice command through the sound output module and not transmit the voice command and/or the result data to a counterpart electronic device 410 of a phone call performed by the phone application in case that the voice assitant operates in a private and an operation of outputting the result data through the sound output module and transmit the voice command and/or the result data to the counterpart electronic device in case that the voice assistant operates in a public mode.

The method may further include an operation of, in case that the application is a phone application and the voice assistant operates in a public mode, identifying whether the voice command includes personal information, an operationf, in case that the voice command includes the personal information, not transmitting the voice command or the result data to a counterpart electronic device of a phone call performed by the phone application and output the voice command or the result data through the sound output module, and an operation of, in case that the voice command does not include the personal information, outputting the voice command or the result data through the sound output module and transmit the voice command or the result data to the counterpart electronic device

The method may further include an operation of identifying whether a user voice acquired through the microphone includes a voice wake-up word or whether a counterpart voice received from the counterpart electronic device includes a voice wake-up word.

The method may include an operation of, in case that the voice assistant operates in the public mode, calling the voice assistant, based on the voice wake-up word included in the counterpart voice and an opreation of, in case that the voice assistant operates in the private mode, refraining from calling the voice assistant, based on the voice wake-up word included in the counterpart voice.

A non-transitory computer-readable recording medium recording a program for causing a processor to perform a method of operating an electronic device 101 according to an embodiment of the disclosure is provided. The program may include an operation of executing an application using a microphone 150, an operation of, while the application using the microphone is executed, receiving an input for calling a voice assistant, an operation of performing control to call the voice assistant, based on the input, and an operation of providing result data corresponding to a voice command received through the microphone.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in any other element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

Various embodiments of the disclosure described and shown in the specification and the drawings are merely specific examples that have been presented to easily explain the technical contents of the disclosure and help understanding of the disclosure, and are not intended to limit the scope of the disclosure. Therefore, the scope of the disclosure should be construed to include, in addition to the embodiments disclosed herein, all changes and modifications derived based on the technical idea of the disclosure.

## Claims

1. An electronic device (101) comprising:
a microphone (150);
a sound output module (155);
memory (130); and
a processor (120),
wherein instructions stored in the memory cause, when executed by the processor, the electronic device to:
execute an application using the microphone; and
while the application using the microphone is executed,
receive an input for calling a voice assistant,
perform control to call the voice assistant, based on the input, and
provide result data corresponding to a voice command received through the microphone.

2. The electronic device of claim 1, wherein the instructions, when executed by the processor, cause the electronic device to,
in case that the application is a phone aplication:
output the result data corresponding to the voice command through the sound output module and not transmit the voice command and/or the result data to a counterpart electronic device (410) of a phone call performed by the phone application in case that the voice assitant operates in a private mode; and
output the result data through the sound output module and transmit the voice command and/or the result data to the counterpart electronic device in case that the voice assistant operates in a public mode.

3. The electronic device of claim 1, wherein the instructions, when executed by the processor, cause the electronic device to, in case that the application is a phone application and the voice assistant operates in a public mode:
identify whether the voice command includes personal information;
in case that the voice command includes the personal information, not transmit the voice command or the result data to a counterpart electronic device of a phone call performed by the phone application and output the voice command or the result data through the sound output module; and
in case that the voice command does not include the personal information, output the voice command or the result data through the sound output module and transmit the voice command or the result data to the counterpart electronic device.

4. The electronic device of claim 2, wherein the instructions, when executed by the processor, cause the electronic device to identify whether a user voice acquired through the microphone includes a voice wake-up word or whether a counterpart voice received from the counterpart electronic device includes a voice wake-up word.

5. The electronic device of claim 4, wherein the instructions, when executed by the processor, cause the electronic device to, in case that the voice assistant operates in the public mode, identify whether the counterpart voice includes the voice wake-up word.

6. The electronic device of claim 4, wherein the instructions, when executed by the processor, cause the electronic device to:
in case that the voice assistant operates in the public mode, call the voice assistant, based on the voice wake-up word included in the counterpart voice; and
in case that the voice assistant operates in the private mode, refrain from calling the voice assistant, based on the voice wake-up word included in the counterpart voice.

7. The electronic device of claim 1, further comprising an audio digital signal processor (DSP) comprising a voice trigger module (257),
wherein the voice trigger module is configured to call the voice assistant,
wherein the input for calling the voice assistant comprises receiving a voice wake-up word by speaking or selecting a button related to the voice assistant,
wherein the voice command is speaking to the voice assistant after a user calls the voice assistant, and
wherein the result data is a result provided by the voice assistant after the voice command is analyzed.

8. The electronic device of claim 7, wherein the instructions, when executed by the processor, cause the electronic device to, in case that the application is a phone application and the voice assistant is called by the voice wake-up word:
not transmit a voice feedback to a counterpart electronic device of a phone call performed by the phone application and output the voice feedback through the sound output module in case that the voice assistant operates in a private mode; and
output the voice feedback by the voice assistant through the sound output module and transmit the voice feedback to the counterpart electronic device in case that the voice assistant operates in a public mode.

9. The electronic device of claim 1, wherein the instructions, when executed by the processor, cause the electronic device to display text corresponding to the voice command or the result data in an execution screen of the application using the microphone on a display (160) of the electronic device.

10. The electronic device of claim 1, wherein the instructions, when executed by the processor, cause the electronic device to, in case that the application using the microphone is a recording application, store the voice command or the result data together with recorded data of the recording application.

11. A method of operating an electronic device (101), the method comprising:
executing an application using a microphone (150); and
while the application using the microphone is executed,
receiving an input for calling a voice assistant,
performing control to call the voice assistant, based on the input, and
providing result data corresponding to a voice command received through the microphone.

12. The method of claim 11, further comprising,
in case that the application is a phone aplication:
outputting the result data corresponding to the voice command through the sound output module and not transmit the voice command and/or the result data to a counterpart electronic device (410) of a phone call performed by the phone application in case that the voice assitant operates in a private mode; and
outputting the result data through the sound output module and transmit the voice command and/or the result data to the counterpart electronic device in case that the voice assistant operates in a public mode.

13. The method of claim 11, further comprising,
in case that the application is a phone application and the voice assistant operates in a public mode:
identifying whether the voice command includes personal information;
in case that the voice command includes the personal information, not transmitting the voice command or the result data to a counterpart electronic device of a phone call performed by the phone application and output the voice command or the result data through the sound output module; and
in case that the voice command does not include the personal information, outputting the voice command or the result data through the sound output module and transmit the voice command or the result data to the counterpart electronic device

14. The method of claim 12, further comprising identifying whether a user voice acquired through the microphone includes a voice wake-up word or whether a counterpart voice received from the counterpart electronic device includes a voice wake-up word.

15. The method of claim 14, further comprising:
in case that the voice assistant operates in the public mode, call the voice assistant, based on the voice wake-up word included in the counterpart voice; and
in case that the voice assistant operates in the private mode, refrain from calling the voice assistant, based on the voice wake-up word included in the counterpart voice.
